# EUROPEAN PATENT APPLICATION

(11) **EP 4 789 900 A1**
(43) Date of publication of application: **12.08.2026**
(21) Application number: 26152005.0
(22) Date of filing: 15.01.2026
(51) Int. Cl.: B60L 3/12, B60L 53/12, B60L 53/30, B60L 53/50, B60L 53/51, B60L 53/53, B60L 53/57, B60L 53/66, B60L 58/14, B63H 21/17

(54) **WATERCRAFT BATTERY MANAGEMENT SYSTEM, AND WATERCRAFT BATTERY MANAGEMENT METHOD**

(30) Priority: 06.02.2025 JP 2025018053
(71) Applicant: Yamaha Hatsudoki Kabushiki Kaisha, Iwata-shi, Shizuoka 438-8501 (JP)
(72) Inventor: Nakamura, Kazuki, 4388501 Iwata-shi, Shizuoka (JP)
(74) Representative: Grünecker Patent- und Rechtsanwälte PartG mbB

(57) **Abstract**

A watercraft battery management system includes a charge level sensor (71) to detect a charge level of a watercraft battery (40) mounted on a watercraft (51), a power supply request transmitter (72, 73) to transmit a power supply request when the charge level of the watercraft battery (40) detected by the charge level sensor (71) is within a predetermined low charge level range, and a power supply request receiver (5, 24) to receive the power supply request transmitted by the power supply request transmitter (72, 73). A battery monitoring kit provided on the watercraft (51) may include the charge level sensor (71) and the power supply request transmitter (72, 73). The power supply request receiver (5, 24) may be mounted on a vehicle (1) including a power supply device (90) to be used to charge the watercraft battery (40).

## Description

The present invention relates to a watercraft battery management system for management of a watercraft battery and a watercraft battery management method of managing a watercraft battery mounted on a watercraft.

Watercraft equipped with an engine propulsion system include a battery for the driving of a starter motor for the ignition of an engine and, as required, include an additional battery to supply power to onboard electrical appliances such as an air conditioner. These batteries are charged with electric power generated by a power generator driven by the engine during the operation of the engine. Further, when such a watercraft is berthed in a marina, it is possible to use the onboard electrical appliances while charging the batteries with electric power supplied from an onshore power facility.

Marinas are rarely equipped with an onshore power facility capable of supplying electric power to all watercraft berthed therein, and only a limited number of watercraft can simultaneously utilize the onshore power facility. In the watercraft, therefore, the charge levels of the batteries are often reduced due to the use of the onboard electrical appliances. In addition, the onshore power facility cannot be immediately utilized even if the battery charge levels are reduced.

US 2023/0312071 A1 discloses an arrangement configured so that the charge level of a battery provided on a watercraft can be transmitted to a user terminal.

It is the object of the present invention to provide a watercraft battery management system for management of a watercraft battery and a watercraft battery management method of managing a watercraft battery mounted on a watercraft that are able to properly manage watercraft batteries provided on watercraft.

According to the present invention said object is solved by a watercraft battery management system for management of a watercraft battery having the features of independent claim 1. Moreover, according to the present invention said object is solved by a watercraft battery management method of managing a watercraft battery mounted on a watercraft having the features of independent claim 14.

Preferred embodiments are laid down in the dependent claims.

Accordingly, an example embodiment of the present teaching provides a watercraft battery management system for the management of a watercraft battery mounted on a watercraft. The watercraft battery management system includes a charge level sensor to detect a charge level of the watercraft battery, a power supply request transmitter to transmit a power supply request when the charge level of the watercraft battery detected by the charge level sensor is within a predetermined low charge level range (e.g., is lower than a predetermined threshold), and a power supply request receiver to receive the power supply request transmitted by the power supply request transmitter.

With this arrangement, when the charge level of the watercraft battery is within the predetermined low charge level range, the power supply request transmitter transmits the power supply request, and the transmitted power supply request is received by the power supply request receiver. With a proper arrangement configured to supply power to the watercraft battery based on the power supply request received by the power supply request receiver, the watercraft battery can be properly managed, and a proper action can be taken to supply the power before a battery charge shortage occurs.

**In** an example embodiment of the present teaching, the power supply request receiver is mounted on a vehicle including a power supply device to be used to charge the watercraft battery.

With this arrangement, the power supply request receiver mounted on the vehicle including the power supply device can receive the power supply request. Thus, the vehicle is able to move to a watercraft that issued the power supply request to supply electric power to the watercraft battery of the watercraft from the power supply device to charge the watercraft battery. Since the power supply device is provided on the vehicle, there is less restriction on the position of the watercraft at which the watercraft battery receives the power supply than in a case in which a stationary onshore power facility provided in a marina is used as the power supply. Even if such an onshore power facility is unavailable, the watercraft battery can be charged by using the power supply device mounted on the vehicle. This provides more options to charge the watercraft battery.

In an example embodiment of the present teaching, the vehicle is a water vehicle other than the watercraft.

With this arrangement, the power supply device is provided on the water vehicle. Therefore, even if the watercraft is berthed in a water area spaced away from a fixed pier or a quay, the watercraft battery can receive power from the power supply device. Even if a berth space is unavailable around the fixed pier or the quay, therefore, the watercraft battery can receive power from the power supply device provided on the water vehicle. This facilitates the supply of power to the watercraft battery, making it possible to properly manage the charge level of the watercraft battery.

In an example embodiment of the present teaching, the water vehicle is able to move to the watercraft by an unmanned operation.

With this arrangement, the water vehicle is moved to the watercraft by the unmanned operation, so that costs (particularly, labor costs) for the operation of the water vehicle to supply the power can be reduced.

In an example embodiment of the present teaching, the water vehicle includes a floating body, a propulsion system attached to the floating body, a steering device to change the direction of the propulsive force of the propulsion system, and a controller configured or programmed to automatically control the propulsion system and the steering device.

With this arrangement, the controller is configured or programmed to automatically control the propulsion system and the steering device provided on the water vehicle such that the water vehicle is able to move to or toward the watercraft by the unmanned operation.

Specifically, the unmanned operation includes that the propulsion system and/or the steering device are not operated by a person. The water vehicle may include no manual maneuvering equipment for the operation of the propulsion system and/or the steering device.

In an example embodiment of the present teaching, the watercraft battery management system further includes a wireless power receiver connected to the watercraft battery. The power supply device includes a wireless power supply device to supply electric power to the watercraft battery via the wireless power receiver.

With this arrangement, the power supply device on the vehicle is electromagnetically coupled to the watercraft battery by the wireless power supply device and the wireless power receiver such that the electric power can be supplied to the watercraft battery from the power supply device. This eliminates a manual operation without the need for a cable connecting operation to charge the watercraft battery, thus further facilitating the charging of the watercraft battery. For example, the vehicle is brought into close proximity to the watercraft or brought into contact with the watercraft so that the wireless power supply device on the vehicle side can be near the wireless power receiver on the watercraft. Thus, the supply of power to the watercraft battery can be achieved.

In an example embodiment of the present teaching, the power supply device includes a power supply battery, and the watercraft battery is charged with electric power stored in the power supply battery.

With this arrangement, the power supply device on the vehicle includes the power supply battery so that the electric power can be preliminarily stored in the power supply battery. This provides a quick response to the power supply request from the watercraft.

In an example embodiment of the present teaching, the watercraft battery management system further includes a power generator on the vehicle to charge the power supply battery.

With this arrangement, the power supply battery can be charged by the power generator on the vehicle. Therefore, the power supply battery of the vehicle can be charged without depending on the onshore power facility.

In an example embodiment of the present teaching, the power generator includes a solar battery.

With this arrangement, the power supply battery can be charged at any place because daylight can be utilized to charge the power supply battery.

In an example embodiment of the present teaching, the watercraft battery management system further includes a position sensor to detect positional information of the watercraft.

With this arrangement, the positional information of the watercraft can be detected. Therefore, the positional information can be contained in the power supply request. Thus, the position of the watercraft requiring the supply of power to the watercraft battery is clearly identified, so that a proper action can be taken for the power supply request.

In an example embodiment of the present teaching, the watercraft battery management system further includes a charge level notifier to notify the user of the watercraft about the charge level of the watercraft battery detected by the charge level sensor.

With this arrangement, the user is notified about the charge level of the watercraft battery so that proper information can be provided to the user. Where a charging service (typically, a pay service) is offered by utilizing the power supply device on the vehicle, for example, the user can confirm that the charging service is properly performed according to the charge level of the watercraft battery.

Another example embodiment of the present teaching provides a battery monitoring kit attachable to the watercraft for the watercraft battery management system. The battery monitoring kit includes the charge level sensor and the power supply request transmitter. The battery monitoring kit may be included on the watercraft when the watercraft is constructed. The battery monitoring kit may be configured to be retrofitted to the already constructed watercraft. Thus, an arrangement for the management of the charge level of the watercraft battery can be added to an existing watercraft.

In an example embodiment of the present teaching, the battery monitoring kit further includes a position sensor to detect the positional information of the watercraft. With this arrangement, for example, the positional information of the watercraft can be contained in the power supply request.

An example embodiment of the present teaching provides a watercraft battery management method of managing a watercraft battery mounted on a watercraft. The method includes determining whether or not a charge level of the watercraft battery detected by a charge level sensor is within a predetermined low charge level range, causing a power supply request transmitter to transmit a power supply request when it is determined that the charge level of the watercraft battery is within the predetermined low charge level range, and causing a power supply request receiver to receive the power supply request.

In an example embodiment of the present teaching, the method further includes moving a vehicle including a power supply device toward the watercraft when the power supply request receiver receives the power supply request, and causing the power supply device to supply electric power to the watercraft battery after the vehicle arrives at the watercraft.

In an example embodiment of the present teaching, the vehicle is a water vehicle other than the watercraft.

In an example embodiment of the present teaching, the water vehicle is able to move toward the watercraft by an unmanned operation.

The above and other elements, features, steps, characteristics and advantages of the present invention will become more apparent from the following detailed description of the example embodiments with reference to the attached drawings.

### BRIEF DESCRIPTION OF THE DRAWINGS

FIG. 1 is a diagram for the description of a watercraft battery management system according to an example embodiment.
FIG. 2 is a block diagram showing the configuration of a battery monitoring kit attachable to a watercraft by way of example.
FIG. 3 is a schematic diagram showing the structure of a movable floating pier (as an exemplary water vehicle) by way of example.
FIG. 4 is a block diagram showing the electrical configuration of the movable floating pier by way of example.
FIG. 5 is a flowchart for the description of the operation of the battery monitoring kit by way of example.
FIG. 6 is a flowchart for the description of an exemplary process to be performed by the controller of the movable floating pier.

### DETAILED DESCRIPTION OF THE EXAMPLE EMBODIMENTS

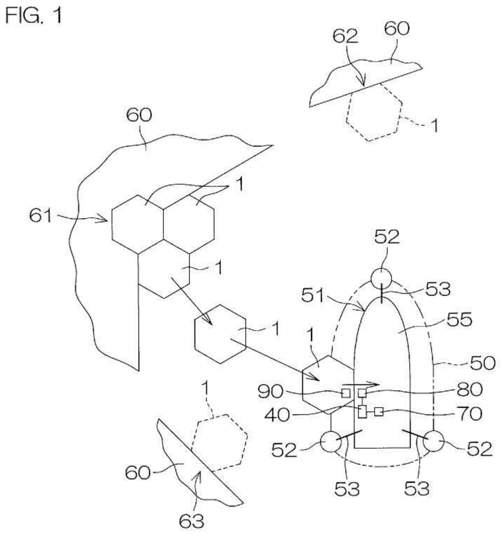

FIG. 1 is a diagram for the description of a watercraft battery management system according to an example embodiment.

The watercraft battery management system manages a watercraft battery 40 mounted on a watercraft 51. The watercraft battery management system includes a battery monitoring kit 70 attachable to the watercraft 51, and a power supply device 90 mounted on a water vehicle other than the watercraft 51. In an example embodiment, the water vehicle is a movable floating pier 1. The watercraft battery management system further includes a power receiving kit 80 attachable to the watercraft 51.

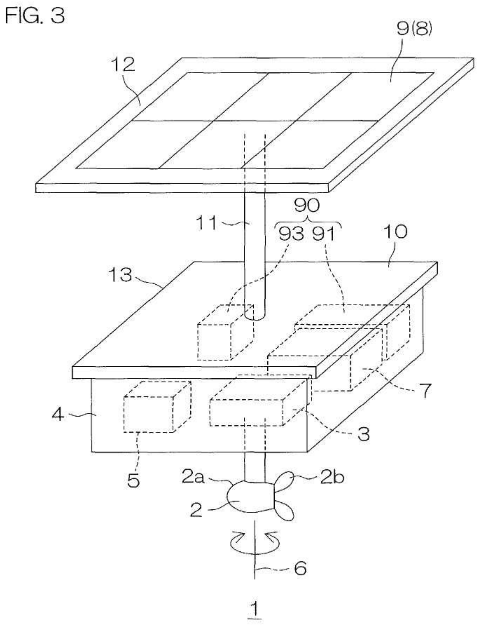

The movable floating pier 1 is a water vehicle movable on water. The movable floating pier 1 includes a propulsion system 2 (see FIG. 3), and a steering device 3 (see FIG. 3) that changes the direction of a propulsive force generated by the propulsion system 2. The movable floating pier 1 is configured to be movable on water and to change its moving direction.

On the other hand, a berth space 50 for the berthing of the watercraft 51 is defined in a water area in which the movable floating pier 1 can be moved, and a mooring pile 52 to which the watercraft 51 is moored is provided in the berth space 50. In the example of FIG. 1, the mooring pile 52 includes a plurality of mooring piles 52 to which the hull 55 of the watercraft 51 is fixed at a plurality of positions. The mooring pile 52 is an exemplary fixed offshore structure. The mooring pile 52 extends upward from its root portion fixedly buried in the ground underwater, and includes a mooring portion protruding above the water. Typically, a mooring aid such as a mooring rope 53 is used to moor the watercraft 51. That is, one of the opposite ends of the mooring rope 53 is tied to the mooring portion of the mooring pile 52, and the other end of the mooring rope 53 is tied to the hull 55. By connecting the hull 55 to the plurality of mooring piles 52, the watercraft 51 can be moored to limit movement of the hull 55.

The berth space 50 is typically spaced away from land 60. The berth space 50 may include a plurality of berth spaces 50. Thus, the berth spaces can be provided for a plurality of watercraft without constructing fixed piers. The movable floating pier 1 is movable on water between the watercraft 51 and a base 61 located near the land 60. The following examples are conceivable for the movable floating pier 1.

The movable floating pier 1 is moved from the base 61 (or from some other location) to or toward the watercraft 51. When the movable floating pier 1 arrives at the watercraft 51, the crew of the watercraft 51 transfer from the watercraft 51 onto the movable floating pier 1. Upon the completion of the transfer of the crew, the movable floating pier 1 with the crew onboard is moved back to the base 61. When the movable floating pier 1 arrives at the base 61, the crew moves onto the land 60.

The movable floating pier 1 is able to move to the watercraft 51 from the base 61 (or from some other location). When the movable floating pier 1 arrives at the watercraft 51, the crew of the watercraft 51 transfer from the watercraft 51 onto the movable floating pier 1. Upon the completion of the transfer of the crew, the movable floating pier 1 with the crew onboard is moved to a disembarkation site 62 different from the base 61. When the movable floating pier 1 arrives at the disembarkation site 62, the crew moves onto the land 60 from the movable floating pier 1. Thereafter, the movable floating pier 1 may be moved back to the base 61, or may be able to move toward another watercraft or toward any site other than the base 61.

After the crew of the watercraft 51 get on the movable floating pier 1 from the land 60 at the base 61, the movable floating pier 1 is able to move to the watercraft 51 from the base 61. When the movable floating pier 1 arrives at the watercraft 51, the crew transfers from the movable floating pier 1 onto the watercraft 51. Upon the completion of the transfer of the crew, the movable floating pier 1 is moved back to the base 61 or is able to move to some other destination.

The crew of the watercraft 51 wait at a waiting site 63 other than the base 61, and the movable floating pier 1 is moved toward the waiting site 63. When the movable floating pier 1 arrives at the waiting site 63, the crew moves onto the movable floating pier 1 from the land 60. After the crew gets on the movable floating pier 1, the movable floating pier 1 is able to move to the watercraft 51 from the waiting site 63. When the movable floating pier 1 arrives at the watercraft 51, the crew transfers from the movable floating pier 1 onto the watercraft 51. After the completion of the transfer of the crew, the movable floating pier 1 is moved back to the base 61, or moved to some other destination.

In any of the examples described above, cargo may be transported instead of the crew or together with the crew in the same manner. Of course, examples of the movable floating pier 1 are not limited to those described above.

The movable floating pier 1 typically includes a plurality of movable floating piers 1 to be simultaneously put in operation. In this case, some of the movable floating piers 1 may be located close to each other to form a larger floating pier (movable floating pier group). On a base 61 defined by one of the movable floating piers 1, for example, the transfer of the crew or the cargo between the land 60 and the one movable floating pier 1 may be achieved via another movable floating pier 1.

In an example embodiment, the movable floating pier 1 includes the power supply device 90. The power supply device 90 is configured to supply electric power to the watercraft battery 40 and charge the watercraft battery 40 with the electric power. The movable floating pier 1 may be used as a charging service, for example, during vacant time when it is not being used to transport crews and/or cargo. In the charging service, the movable floating pier 1 is moved close to the watercraft 51 to charge the watercraft battery 40.

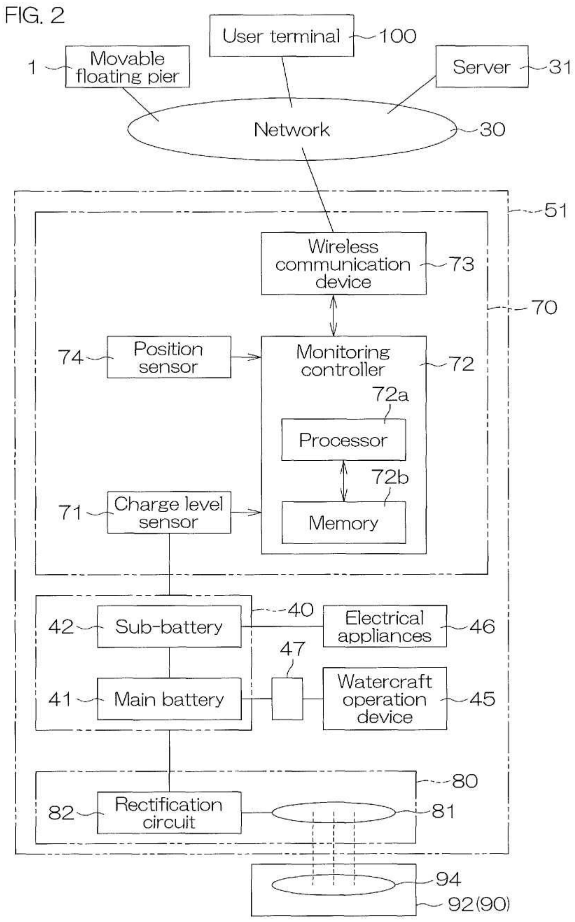

FIG. 2 is a block diagram showing the structure of the battery monitoring kit attachable to the watercraft 51 by way of example.

As described above, the watercraft battery 40 is mounted on the watercraft 51. The battery monitoring kit 70 and the power receiving kit 80 are connected to the watercraft battery 40. The watercraft 51 is provided with a watercraft operation device 45 such as a watercraft propulsion system. The watercraft battery 40 includes a main battery 41 that supplies the electric power to the watercraft operation device 45. The watercraft battery 40 may further include a sub-battery 42 that supplies the electric power to electrical appliances 46 other than the watercraft operation device 45.

The watercraft propulsion system as an example of the watercraft operation device 45 may be, for example, an engine propulsion system using an engine as its drive source. In this case, the watercraft propulsion system includes a starter motor for the ignition of the engine, a propeller driven by the engine, a power generator driven by the engine, and the like. In this case, the main battery 41 supplies the electric power to the starter motor at the ignition of the engine, and is charged with electric power generated by the power generator during the operation of the engine. The electric power generated by the power generator is also used to charge the sub-battery 42. The watercraft propulsion system is not limited to the engine propulsion system, but may be an electric propulsion system configured so that its propeller is driven by an electric motor.

A battery switch 47 is provided between the main battery 41 and the watercraft operation device 45. A user who starts the watercraft 51 turns on the battery switch 47. The user turns off the battery switch 47 to reduce or prevent the discharge of the main battery 41 when the watercraft 51 is stopped.

The battery monitoring kit 70 is connected, for example, to the positive terminal and the negative terminal of the main battery 41. The battery monitoring kit 70 may be incorporated in the hull 55 when the watercraft 51 is constructed, or may be configured to be retrofitted to the already constructed watercraft 51. Similarly, the power receiving kit 80 is connected, for example, to the positive terminal and the negative terminal of the main battery 41. The power receiving kit 80 may be incorporated in the hull 55 when the watercraft 51 is constructed, or may be configured to be retrofitted to the already constructed watercraft 51.

The battery monitoring kit 70 includes a charge level sensor 71 to detect the charge level of the watercraft battery 40, a monitoring controller 72, and a wireless communication device 73. The wireless communication device 73 is connected to a network 30 in an area including the base 61 and the berth space 50 in a wirelessly communicable manner. Thus, the battery monitoring kit 70 can communicate with movable floating piers 1 connected to the network 30. An example of the network 30 is a wireless LAN (Local Area Network).

A server 31 that mediates the communication between the battery monitoring kit 70 and the movable floating piers 1 may be connected to the network 30. For example, the owner of the watercraft 51 mounted with the battery monitoring kit 70 can access the server 31 with the use of a user terminal 100 which may be an information terminal such as a smartphone, a tablet, or a PC to check the charge level of the watercraft battery 40 (battery charge level). The access to the server 31 from the user terminal 100 may be achieved via the network 30, or may be achieved via the Internet or some other network. Typically, a dedicated application is installed in the user terminal 100 so that the user of the user terminal 100 can acquire information about the battery charge level registered in the server 31 with the use of the dedicated application.

The monitoring controller 72 includes a processor 72a and a memory 72b. The processor 72a executes a program stored in the memory 72b to perform various functions. Thus, the monitoring controller 72, together with the wireless communication device 73, may function as the power supply request transmitter.

Specifically, the monitoring controller 72 transmits a power supply request to the network 30 via the wireless communication device 73 when the charge level detected by the charge level sensor 71 is within a predetermined low charge level range (is lower than a predetermined threshold). Further, the monitoring controller 72 may perform a periodic transmission function to periodically transmit periodic transmission information including the charge level detected by the charge level sensor 71 to the network 30 (e.g., in a 1-hour to 24-hour cycle). If the wireless communication device 73 receives a response request via the network 30, the monitoring controller 72 may perform a response function to transmit response information including charge level information and other information to the network 30 via the wireless communication device 73 in response to the response request.

In an example embodiment, the battery monitoring kit 70 includes a position sensor 74 to detect positional information. The position sensor 74 may be a GPS receiver. The GPS (Global Positioning System) is an exemplary GNSS (Global Navigation Satellite System) that measures a position on the earth using an artificial satellite. The position sensor 74 detects the positional information of the battery monitoring kit 70 to detect the positional information of the watercraft 51. The positional information detected by the position sensor 74 is supplied to the monitoring controller 72. The monitoring controller 72 transmits the power supply request together with the positional information to the network 30. Further, the monitoring controller 72 may add the positional information to the periodic transmission information to be transmitted by the periodic transmission function, and may add the positional information to the response information to be transmitted by the response function.

In an example embodiment, the power receiving kit 80 is a wireless power receiver, and includes a power receiving coil 81 and a rectification circuit 82 connected to the power receiving coil 81. The rectification circuit 82 is connected to the positive terminal and the negative terminal of the main battery 41. On the other hand, the power supply device 90 provided on the movable floating pier 1 includes a wireless power supply device 92. The movable floating pier 1 is moved close to the watercraft 51 so that the power supply coil 94 of the wireless power supply device 92 can be electromagnetically coupled to the power receiving coil 81. Thus, the electric power can be supplied from the wireless power supply device 92 to the power receiving coil 81, and the watercraft battery 40 can be charged with the supplied electric power.

FIG. 3 is a schematic diagram showing the structure of the movable floating pier 1 by way of example.

The movable floating pier 1 includes a floating body 4, the propulsion system 2, the steering device 3, and a controller 5. The propulsion system 2, the steering device 3, and the controller 5 are provided in the floating body 4.

The steering device 3 changes the direction of the propulsive force generated by the propulsion system 2, i.e., the direction of a propulsive force acting on the floating body 4. The steering device 3 may pivot the propulsion system 2 about a vertical pivot axis 6. For example, the steering device 3 may be configured to pivot the propulsion system 2 to any azimuth angle throughout 360 degrees about the pivot axis 6. In other words, the steering device 3 may be configured so that the propulsive force generated by the propulsion system 2 can be directed at any azimuth angle throughout 360 degrees about the pivot axis 6.

The controller 5 is configured or programmed to control the propulsion system 2 and the steering device 3 to perform a control operation to move the movable floating pier 1 on water by an unmanned operation.

The unmanned operation includes an operation state such that the generation of the propulsive force by the propulsion system 2 and the operation of the steering device 3 are controlled without the use of manual maneuvering equipment. A manual maneuvering operation includes an operation performed with the use of a manual operation device that provides a command indicating the magnitude and/or the direction of the propulsive force to be generated by the propulsion system 2, and an operation performed with the use of a manual operation device that provides a command to change the direction of the propulsive force generated by the propulsion system 2. These manual operation devices include the manual maneuvering equipment. Specific examples of the manual operation devices include an acceleration lever, a steering wheel, a joystick, and the like. In an example embodiment, the movable floating pier 1 includes does not include any manual maneuvering equipment.

In an example embodiment, the propulsion system 2 may be an electric propulsion system using an electric motor 2a as its drive source. That is, the propulsion system 2 includes the electric motor 2a and a propeller 2b driven by the electric motor 2a.

The movable floating pier 1 further includes a battery 7 to supply electric power to the propulsion system 2. The movable floating pier 1 further includes a charger 8 to charge the battery 7. The charger 8 may include a solar battery panel 9 (solar battery). The solar battery panel 9 is an example of the power generator.

As described above, the movable floating pier 1 includes the power supply device 90 to supply the power to the watercraft battery 40 (see FIG. 1) and charge the watercraft battery 40. The power supply device 90 may include a power supply battery 91 different from the battery 7. The power supply battery 91 may be connected to the charger 8, and charged with electric power supplied from the charger 8. The power supply battery 91 stores the electric power to be supplied to the watercraft battery 40. Of course, the battery 7 may double as the power supply battery.

The floating body 4 may be a hollow structure made of a light-weight material such as FRP (Fiber Reinforced Plastic) or urethane. The floating body 4 includes a deck 10 that supports the crew and/or the cargo on its upper surface. A fender (not shown) is provided on the peripheral portion of the deck 10. Further, a post 11 projects upward from the deck 10, and a roof 12 is fixed to the upper end of the post 11. The solar battery panel 9 may be disposed on the upper surface of the roof 12. The upper surface of the deck 10 may be as a flat floor, or may have a recessed portion to accommodate the crew and/or the cargo. For example, the surface of the deck 10 may include a recess (a cup-shaped portion) having a seat surface on which the crew sit and a backrest surface provided behind the seat surface to support the backs of the upper bodies of the crew.

The deck 10 includes a pressing portion 13 provided on the edge thereof to be brought into abutment against the watercraft 51 (typically, against the side surface of the hull 55).

The pressing portion 13 preferably has an edge configured to conform to a portion of the hull 55 against which the pressing portion 13 is brought into abutment. Typically, the pressing portion 13 may have a generally linear edge as seen in plan view. In this case, the pressing portion 13 is pressed against the side surface (particularly, a linear surface portion as seen in plan view) of the hull 55, thus facilitating the transfer of the crew and/or the cargo between the deck 10 and the watercraft 51.

The deck 10 is preferably configured so that the pressing portion 13 thereof includes linear edges, and may have, for example, a polygonal shape as seen in plan view. In FIG. 1, the deck 10 is illustrated as having a hexagonal shape (more specifically, a regular hexagonal shape) as seen in plan view by way of example. In FIG. 3, the deck 10 is illustrated as having a rectangular shape as seen in plan view by way of example. In order to provide a large floating pier including a plurality of movable floating piers 1 located close to each other, the plan shape of the deck 10 of each of the movable floating piers 1 is preferably selected so that the decks 10 of the movable floating piers 1 can be combined with each other with minimum gaps therebetween.

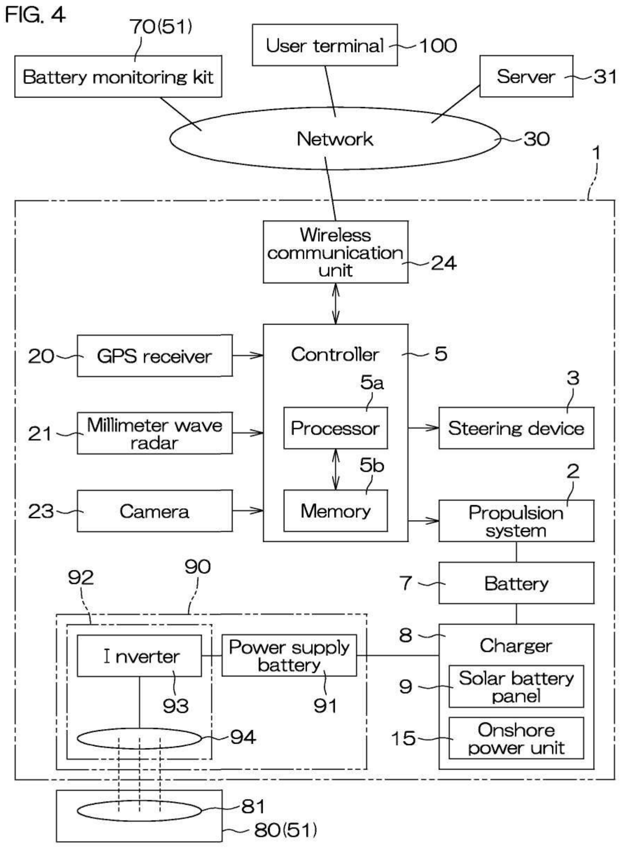

FIG. 4 is a block diagram showing the electrical configuration of the movable floating pier 1 by way of example.

As described above, the movable floating pier 1 includes the propulsion system 2, the steering device 3, and the controller 5. The movable floating pier 1 further includes the battery 7, the charger 8, the power supply device 90, and the like. Further, the movable floating pier 1 includes a GPS receiver 20, a millimeter wave radar 21, a camera 23, a wireless communication unit 24, and the like. The charger 8 may include the solar battery panel 9. The charger 8 may include an onshore power unit 15 including a charge cable connectable to an onshore power facility. In this case, the battery 7 and the power supply battery 91 can be charged not only with the electric power generated by the solar battery panel 9 but also with electric power supplied from the onshore power facility as required. Typically, the onshore power facility is provided on the base 61 (see FIG. 1).

The controller 5 includes a processor 5a and a memory 5b. The processor 5a executes a program stored in the memory 5b to perform various functions, particularly, to control the propulsion system 2 and the steering device 3.

The GPS receiver 20 is an exemplary position sensor that acquires the positional information of the movable floating pier 1.

The millimeter wave radar 21 is a sensor that acquires positional information such as a distance to an object and/or the azimuth of the object and the relative speed of the object by emitting millimeter wave pulses therearound. The millimeter wave radar 21 can be used to detect a nearby obstacle and to acquire information about a distance to the watercraft 51, the azimuth of the watercraft 51, the relative speed of the watercraft 51, and the like. The millimeter wave radar 21 is an exemplary distance sensor.

The camera 23 is a photographing apparatus that photographs the object and generates image data of the object. The camera 23 can be used to detect the obstacle, to determine the position and the azimuth of the watercraft 51, to recognize the pressing position of the hull 55 and the power receiving position of the hull 55, and to determine the positions and/or the azimuths of the base 61 and other facilities.

The output signals of these sensors are inputted to the controller 5. The controller 5 is configured or programmed to acquire the output signals of the sensors and to control the operations of the sensors as required.

The wireless communication unit 24 is connected to the network 30 in a wirelessly communicable manner. The wireless communication unit 24 can communicate with the battery monitoring kit 70 connected to the network 30. The communication may be mediated by the server 31.

The server 31 can communicate with the controllers 5 of the respective movable floating piers 1. Further, the server 31 can communicate with battery monitoring kits 70 respectively provided on a plurality of watercraft 51. When a power supply request is transmitted from the battery monitoring kit 70 of one of the watercraft 51, for example, the power supply request is received by the server 31. The server 31 transmits the power supply request to the movable floating piers 1. One of the movable floating piers 1 first responding to this power supply request establishes communication with the battery monitoring kit 70 transmitting the power supply request, and is able to move to the one watercraft 51 mounted with the battery monitoring kit 70 to supply the power.

The power supply device 90 includes the power supply battery 91 and the wireless power supply device 92. The wireless power supply device 92 includes an inverter 93 connected to the power supply battery 91, and the power supply coil 94, which is connected to the inverter 93. The power supply coil 94 can be electromagnetically coupled to the power receiving coil 81 of the power receiving kit 80. With the power supply coil 94 closely opposed to or near the power receiving coil 81, the inverter 93 supplies alternating current to the power supply coil 94 such that AC power can be induced in the power receiving coil 81. The AC power is rectified by the rectification circuit 82, and the rectified AC power is supplied to the watercraft battery 40.

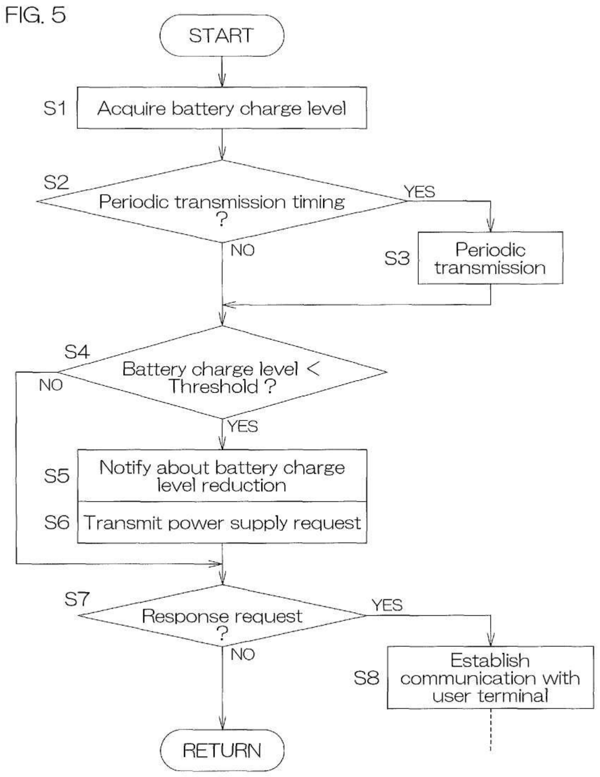

FIG. 5 is a flowchart for the description of the operation of the battery monitoring kit 70 by way of example.

The monitoring controller 72 of the battery monitoring kit 70 acquires the battery charge level detected by the charge level sensor 71 (Step S1). If a periodic transmission timing occurs (YES in Step S2), the monitoring controller 72 transmits periodic transmission information including the latest battery charge level detection value to the network 30 (Step S3). The battery charge level detection value thus transmitted is stored, for example, in the server 31. Therefore, the user of the user terminal 100 accesses the server 31, as required, to know the battery charge level.

The monitoring controller 72 determines whether or not the battery charge level detected by the charge level sensor 71 is within the low charge level range lower than the predetermined threshold (e.g., 15% to 25%) (Step S4). When it is determined that the battery charge level is within the low charge level range (YES in Step S4), the monitoring controller 72 notifies the server 31 about a reduction in the battery charge level without waiting for the periodic transmission timing (Step S5), and transmits a power supply request to the server 31 (Step S6). The power supply request contains the positional information detected by the position sensor 74.

The server 31 notified about the battery charge level reduction notifies the user terminal 100 about the battery charge level reduction. The user terminal 100 performs a notifying operation to notify the user about the battery charge level reduction. The notifying operation may be a notification sound, the display of the notification on a display device, and the like. That is, the user terminal 100 functions as a charge level notifier to notify the user about the charge level of the watercraft battery 40. The server 31 further transmits the power supply request to the plurality of movable floating piers 1 connected to the network 30.

The user can transmit a response request to the battery monitoring kit 70 by operating the user terminal 100. The response request is received by the server 31, and transmitted to the battery monitoring kit 70 from the server 31 via the network 30. If the monitoring controller 72 receives the response request (YES in Step S7), the monitoring controller 72 establishes communication with the user terminal 100 (Step S8). Thereafter, the user operates the user terminal 100 to request the monitoring controller 72 to transmit information. The information to be transmitted may include the latest battery charge level detection value, the positional information of the battery monitoring kit 70 (i.e., the positional information of the watercraft 51), and the like.

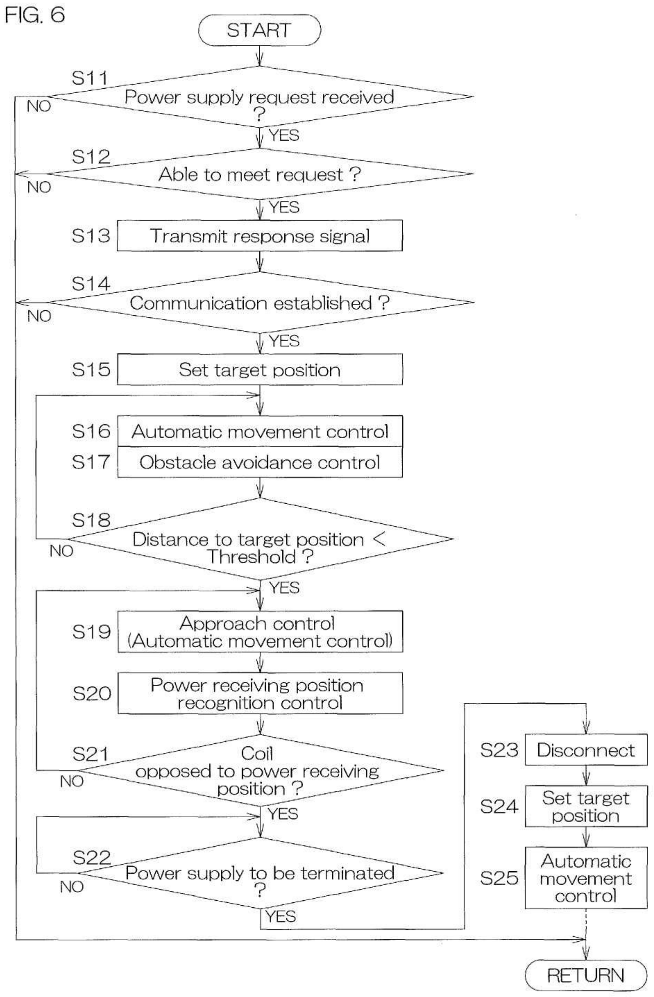

FIG. 6 is a flowchart for the description of an exemplary process to be performed by the controller 5 of the movable floating pier 1.

The controller 5 monitors whether or not the wireless communication unit 24 receives the power supply request. If the wireless communication unit 24 receives the power supply request (YES in Step S11) and the movable floating pier 1 is able to meet the power supply request (YES in Step S12), the wireless communication unit 24 transmits a response signal indicating the acceptance of the power supply request to the network 30 (Step S13). The response signal is transmitted to the battery monitoring kit 70 which has issued the power supply request. Where the plurality of movable floating piers 1 are connected to the network 30, one of the movable floating piers 1 transmitting the response signal first is regarded as having accepted the power supply request, and the controllers 5 of the other movable floating piers 1 regard this power supply request as a finished command. In this manner, the communication between the battery monitoring kit 70 and the controller 5 of the one movable floating pier 1 is established (Step S14).

The controller 5 of the movable floating pier 1 which has accepted the power supply request and established the communication with the battery monitoring kit 70 sets a target position based on the positional information contained in the power supply request (the positional information of the watercraft 51) (Step S15), and performs an automatic movement control operation to move the movable floating pier 1 toward the target position by the unmanned operation (Step S16). For example, the controller 5 controls the propulsion system 2 and the steering device 3 based on the current position of the movable floating pier 1 detected by the GPS receiver 20 and the target position, and moves the movable floating pier 1 closer to the target position. Further, the controller 5 preferably also preforms an obstacle avoidance control operation to detect an obstacle using the millimeter wave radar 21 and avoid the obstacle (Step S17, as a portion of the automatic movement control operation).

If a distance between the movable floating pier 1 and the target position is reduced to less than a predetermined threshold (YES in Step S18), the controller 5 may perform an approach control operation to cause the movable floating pier 1 to approach the watercraft based on the distance to the watercraft 51 detected by the millimeter wave radar 21 (exemplary distance sensor) (Step S19, as a portion of the automatic movement control operation). The predetermined threshold is set based on a distance detectable by the millimeter wave radar 21, and may be, for example, about 10 meters. In this approach control operation, the controller 5 preferably causes the movable floating pier 1 to approach the watercraft 51 at a speed falling within a predetermined low speed range (e.g., not higher than 5 km/h).

The controller 5, while performing the approach control operation (Step S19), performs a power receiving position recognition control operation to recognize a portion of the watercraft 51 (i.e., a power receiving position) to be brought near the power supply coil 94 of the wireless power supply device 92 of the movable floating pier 1 (Step S20). The power receiving position is located, for example, on the side surface of the hull 55 of the watercraft 51, and the power receiving coil 81 of the power receiving kit 80 (wireless power receiver) is disposed behind the power receiving position. Thus, the power supply coil 94 is close to the power receiving position to be close to the power receiving coil 81.

The power receiving position may be affixed with an identification code for the identification thereof. For example, a sticker carrying a predetermined symbol or a pattern may be preliminarily provided on the side surface of the hull 55. For the power receiving position recognition control (Step S20), specifically, the controller 5 performs an image recognition process on an image photographed by the camera 23. The controller 5 recognizes the power receiving position by the image recognition process, and controls the propulsion system 2 and the steering device 3 to bring the power supply coil 94 close to the recognized power receiving position.

With the power supply coil 94 close to the power receiving position (YES in Step S21), the supply of power from the power supply device 90 to the watercraft battery 40 is started.

In the supply of power to the watercraft battery 40, the controller 5 determines whether or not to terminate the power supply (Step S22). If the battery charge level detected by the charge level sensor 71 reaches a predetermined charge completion level (e.g., a predetermined level in a range of 85% to 100%), for example, the monitoring controller 72 of the battery monitoring kit 70 issues a charge completion notification. The charge completion notification is transmitted to the controller 5 of the movable floating pier 1 by direct communication or by communication via the server 31. When the charge completion notification is received, the controller 5 determines that the power supply is to be terminated. Alternatively, the controller 5 may determine that the power supply is to be terminated if a predetermined period of time elapses after the start of the power supply or if a power supply amount reaches a predetermined level. Further, the controller 5 may determine that the power supply is to be terminated if receiving a movement command indicating that the movable floating pier 1 is to be moved away from the watercraft 51. That is, the movable floating pier 1 may be managed so as to give preferential consideration of a movement command to transport crew and/or cargo, and supply power to the watercraft battery 40 during vacant time in which it is not being used to transport crew and/or cargo.

When it is determined that the power supply is to be terminated (YES in Step S22), the controller 5 disconnects itself from the battery monitoring kit 70 (Step S23). Further, the controller 5 sets a next target position (Step S24), and performs the automatic movement control operation to move the movable floating pier 1 toward the next target position by the unmanned operation (Step S25). Thus, the propulsion system 2 and the steering device 3 are controlled so as to move the movable floating pier 1 toward the next target position. The next target position may be the base 61 or may be a target position indicated by a movement command supplied from the network 30.

In an example embodiment, the battery monitoring kit 70 is provided on the watercraft 51. The battery monitoring kit 70 includes the charge level sensor 71 that detects the charge level of the watercraft battery 40, the monitoring controller 72, and the wireless communication device 73. When the charge level of the watercraft battery 40 detected by the charge level sensor 71 is within the predetermined low charge level range (more specifically, is lower than the predetermined threshold), the monitoring controller 72 causes the wireless communication device 73 to transmit the power supply request to the network 30. That is, the monitoring controller 72 and the wireless communication device 73 define the power supply request transmitter that transmits the power supply request. The power supply request transmitted to the network 30 is received by the server 31, and further transmitted to the plurality of movable floating piers 1 connected to the network 30.

The controllers 5 of the movable floating piers 1 each receive the power supply request via the wireless communication unit 24. That is, the controller 5 and the wireless communication unit 24 define the power supply request receiver that receives the power supply request.

When the charge level of the watercraft battery 40 is within the predetermined low charge level range, therefore, the power supply request is transmitted from the battery monitoring kit 70, and is received by the controllers 5 of the movable floating piers 1. If any one of the movable floating piers 1 is able to meet the power supply request, the controller 5 of the one movable floating pier 1 accepts the power supply request, and the movable floating pier 1 is automatically moved to the watercraft 51 that issued the power supply request by the unmanned operation to supply the electric power to the watercraft battery 40 of the watercraft 51. Thus, an arrangement to automatically supply power to the watercraft battery 40 can be provided based on the power supply request generated by the battery monitoring kit 70. This makes it possible to properly manage the watercraft battery 40 to take a proper action to supply the power before the battery charge shortage occurs.

The movable floating piers 1 are vehicles, more specifically, water vehicles, which each include the power supply device 90 to charge the watercraft battery 40. Since the power supply device 90 is provided on each of the vehicles, there is less restriction on the locations of the watercraft 51 at which the watercraft 51 receives the power supply than in a case in which a stationary onshore power facility provided in a marina is utilized to supply the power. Even if the onshore power facility is unavailable, the watercraft battery 40 can be charged by using the power supply device 90 provided on the vehicle. This provides more options to charge the watercraft battery 40. In addition, the power supply device 90 is provided on the movable floating pier 1 as an example of the water vehicle. Therefore, even if the watercraft 51 is berthed in a water area spaced away from a fixed pier or a quay, the watercraft battery 40 can receive power from the power supply device 90. Even if a berth space is unavailable around the fixed pier or the quay, therefore, the watercraft battery 40 can receive power from the movable floating pier 1. This facilitates the supply of power to the watercraft battery 40 making it possible to properly manage the charge level of the watercraft battery 40.

Further, the movable floating pier 1 is automatically moved to the watercraft 51 that issued the power supply request by the unmanned operation so that costs (particularly, labor costs) for the operation of the water vehicle to supply the power can be reduced.

In an example embodiment, the power receiving kit 80 is provided on the watercraft 51. The power receiving kit 80 functions as the wireless power receiver connected to the watercraft battery 40. Further, the power supply device 90 provided on the movable floating pier 1 includes the wireless power supply device 92 that supplies the electric power to the watercraft battery 40 via the wireless power receiver (power receiving kit 80). Therefore, the power supply device 90 provided on the movable floating pier 1 is electromagnetically coupled to the watercraft battery 40 by the wireless power supply device 92 and the wireless power receiver (power receiving kit 80) such that the electric power can be supplied from the power supply device 90 to the watercraft battery 40. This eliminates a manual operation of a cable connecting operation to charge the watercraft battery 40, thus further facilitating the charging of the watercraft battery 40. That is, the movable floating pier 1 is brought close to the watercraft 51 or brought into contact with the watercraft 51 so that the wireless power supply device 92 provided on the movable floating pier 1 can be close to the wireless power receiver (power receiving coil 81) provided on the side of the watercraft 51. Thus, the watercraft battery 40 can be charged.

In an example embodiment, the power supply device 90 provided on the movable floating pier 1 includes the power supply battery 91, and the watercraft battery 40 is charged with the electric power stored in the power supply battery 91. Thus, the electric power can be preliminarily stored in the power supply battery 91. This provides a quick response to the power supply request from the watercraft 51.

In an example embodiment, the movable floating pier 1 includes the charger 8 to charge the power supply battery 91, and the charger 8 includes the solar battery panel 9 as an example of the power generator. Therefore, the power supply battery 91 can be charged by the power generator provided on the movable floating pier 1. Thus, the power supply battery 91 can be charged without depending on the onshore power facility. In addition, the solar battery panel 9 functioning as the power generator can utilize daylight to charge the power supply battery 91 so that the power supply battery 91 can be charged at any place.

In an example embodiment, the battery monitoring kit 70 includes the position sensor 74 that detects the positional information of the watercraft 51. Therefore, the positional information of the watercraft 51 can be contained in the power supply request. Thus, the position of the watercraft 51 requiring the supply of power to the watercraft battery 40 can be clearly identified in the power supply request so that the movable floating pier 1 can quickly take a proper action for the power supply request.

In an example embodiment, the monitoring controller 72 of the battery monitoring kit 70 transmits the charge level of the watercraft battery 40 detected by the charge level sensor 71 to the network 30 via the wireless communication device 73. The battery charge level is notified to the user terminal 100 via the server 31. Thus, the monitoring controller 72 and the wireless communication device 73 function as the charge level notifier to notify the user about the charge level of the watercraft battery 40. With this arrangement, proper information can be provided to the user. Where the charging service (typically, a pay service) is offered using the power supply device 90 provided on the movable floating pier 1, for example, the user can confirm that the charging service is properly performed according to the charge level of the watercraft battery 40.

In an example embodiment described above, the communication between the battery monitoring kit 70 and the movable floating pier 1 is mediated by the server 31. Alternatively, the battery monitoring kit 70 and the movable floating pier 1 may communicate with each other directly without the mediation by the server 31. Further, the battery monitoring kit 70 and the movable floating pier 1 may communicate with each other not only by the wireless LAN communication but also by Bluetooth (registered tradename) or other communication method.

In an example embodiment described above, the electric propulsion system is provided as the propulsion system 2 on the movable floating pier 1. Alternatively, an engine propulsion system including an engine as its drive source may be used. In this case, a power generator driven by the engine may be utilized as the power generator to charge the power supply battery 91.

**In** an example embodiment described above, the position sensor such as the GPS receiver 20 is provided on the movable floating pier 1. Alternatively, where the movable region of the movable floating pier 1 is not large, for example, the movable floating pier 1 can be properly moved by recognizing the watercraft 51 using a distance sensor such as the millimeter wave radar 21 and the camera 23 even without the position sensor.

In an example embodiment described above, the movable floating pier 1 is used as the water vehicle. Alternatively, a watercraft dedicated for the charging service may be used as the water vehicle. Alternatively, the watercraft battery management system may be configured so that the power supply device is provided on a land vehicle such as an automobile movable on land, and electric power is supplied to a watercraft berthed in a marina from the land.

## Claims

1. A watercraft battery management system for management of a watercraft battery (40) configured to be mounted on a watercraft (51), the watercraft battery management system comprising:
a charge level sensor (71) configured to detect a charge level of the watercraft battery (40);
a power supply request transmitter (72, 73) configured to transmit a power supply request when the charge level of the watercraft battery (40) detected by the charge level sensor (71) is within a predetermined low charge level range; and
a power supply request receiver (5, 24) configured to receive the power supply request transmitted by the power supply request transmitter (72, 73).

2. The watercraft battery management system according to claim 1, further comprising a vehicle (1), wherein the power supply request receiver (5, 24) is mounted on the vehicle (1), the vehicle (1) includes a power supply device (90) configured to be used to charge the watercraft battery (40).

3. The watercraft battery management system according to claim 2, wherein the vehicle is a water vehicle (1) other than the watercraft (51).

4. The watercraft battery management system according to claim 3, wherein the water vehicle (1) is configured to move toward the watercraft (51) by an unmanned operation.

5. The watercraft battery management system according to claim 4, wherein the water vehicle (1) includes a floating body (4), a propulsion system (2) attached to the floating body (4), a steering (3) configured to change a direction of a propulsive force of the propulsion system, and a controller (5) configured or programmed to automatically control the propulsion system and the steering (3).

6. The watercraft battery management system according to any one of claims 2 to 5, further comprising:
a wireless power receiver (80) connected to the watercraft battery (40); wherein
the power supply device (90) includes a wireless power supply device (92) configured to supply electric power to the watercraft battery (40) via the wireless power receiver (80).

7. The watercraft battery management system according to any one of claims 2 to 6, wherein the power supply device (90) includes a power supply battery (91), and the watercraft battery (40) is configured to be charged with electric power stored in the power supply battery (91).

8. The watercraft battery management system according to claim 7, further comprising a power generator (9) provided on the vehicle (1) configured to charge the power supply battery (91).

9. The watercraft battery management system according to claim 8, wherein the power generator includes a solar battery (9).

10. The watercraft battery management system according to any one of claims 1 to 9, further comprising a position sensor (74) configured to detect positional information of the watercraft (51).

11. The watercraft battery management system according to any one of claims 1 to 10, further comprising a charge level notifier (100) configured to notify a user of the watercraft (51) about the charge level of the watercraft battery (40) detected by the charge level sensor (71).

12. The watercraft battery management system according to any one of claims 1 to 11, wherein the charge level sensor (71) and the power supply request transmitter (72, 73) are elements of a battery monitoring kit (70) attachable to the watercraft (51).

13. The watercraft battery management system according to claim 10 and 12, wherein the position sensor (74) is an element of the battery monitoring kit (70).

14. A watercraft battery management method of managing a watercraft battery (40) mounted on a watercraft (51), the watercraft battery management method comprising:
a step (S4) of determining whether or not a charge level of the watercraft battery (40) detected by a charge level sensor (71) is within a predetermined low charge level range;
a step (S6) of causing a power supply request transmitter (72, 73) to transmit a power supply request when it is determined that the charge level of the watercraft battery (40) is within the predetermined low charge level range; and
a step (S11) of causing a power supply request receiver (5, 24) to receive the power supply request.

15. The watercraft battery management method according to claim 14, further comprising:
a step (S15-S21) of moving a vehicle (1) including a power supply device (90) toward the watercraft (51) when the power supply request receiver (5, 24) receives the power supply request; and
a step (S22) of causing the power supply device (90) to supply electric power to the watercraft battery (40) after the vehicle (1) arrives at the watercraft (51).

16. The watercraft battery management method according to claim 15, wherein the vehicle is a water vehicle (1) other than the watercraft (51).

17. The watercraft battery management method according to claim 16, wherein the water vehicle (1) is able to move to the watercraft (51) by an unmanned operation.
